# EUROPEAN PATENT APPLICATION

(11) **EP 4 783 451 A1**
(43) Date of publication of application: **29.07.2026**
(21) Application number: 26153781.5
(22) Date of filing: 23.01.2026
(51) Int. Cl.: H02P 21/00, H02M 1/12, H02P 23/00, H02P 25/22, H02P 27/14

(54) **APPARATUS AND METHOD FOR OPTIMIZING RESTRICTED PULSE MODULATION SCHEDULE**

(30) Priority: 23.01.2025 US 202519035350
(71) Applicant: ABB SCHWEIZ AG, 5400 Baden (CH)
(72) Inventor: BRINKLEY, Timothy L., 72916 Fort Smith (US); AGORO, Sodiq Adeshina, 27612 Raleigh (US)
(74) Representative: Maiwald GmbH

(57) **Abstract**

A motor drive system optimizing a restricted pulse modulation schedule includes a six-phase motor has a stator with a plurality of stator phase windings separated by 30 electrical degrees such that each of the six stator phases is interleaved. A power supply supplies current to inverter(s) for the motor. The inverter has a plurality of logic gates connecting the inverter to the plurality of stator phase windings. A controller is configured with an incident energy threshold manipulates the plurality of logic gates to transmit pulse-width modulation current to the plurality of stator phase windings such that the inverter supplies current to the motor to satisfy an output requirement of the six-phase motor. The controller restricts the current to the plurality of stator phase windings such that a common mode voltage to the stator is at or below the incident energy threshold.

## Description

### FIELD

The present disclosure relates to an apparatus and method for optimizing restricted pulse modulation schedules.

### BACKGROUND

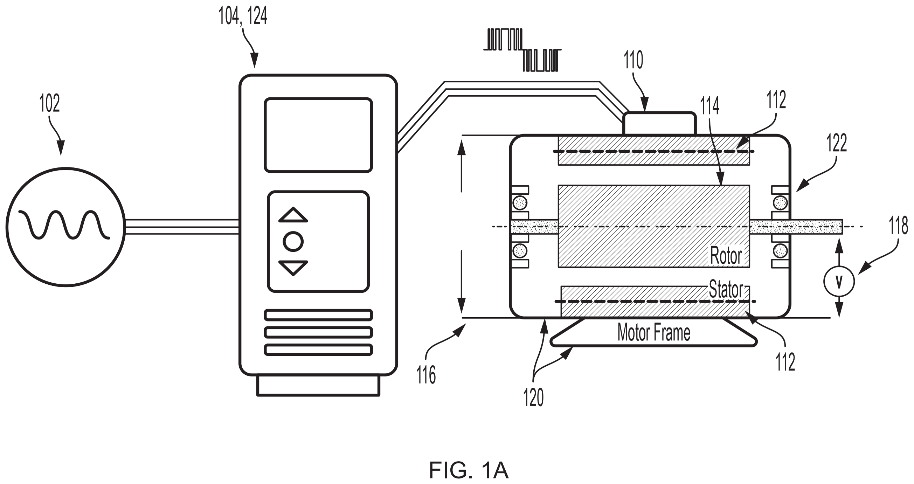

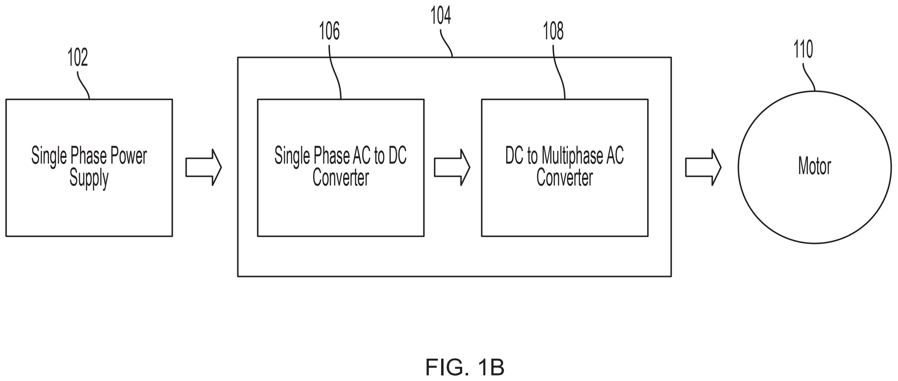

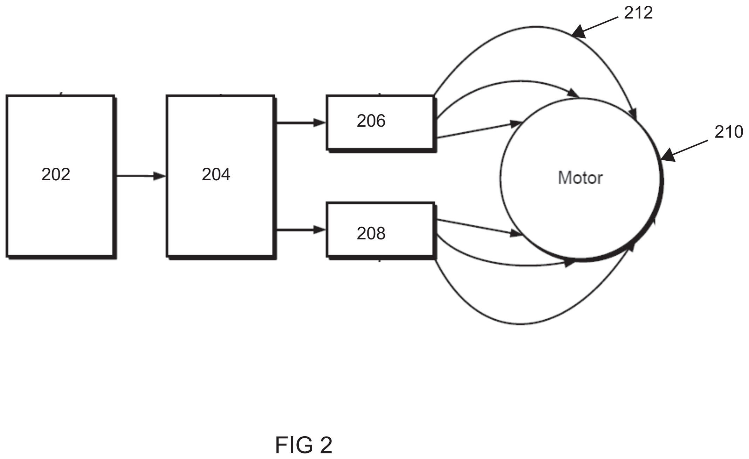

Electric motors, particularly those used in industrial and commercial applications, such as three-phase drive motors, often experience issues related to shaft voltage. See FIGs. 1 and 2, depicting views of embodiments of state of the art three phase drive motors with common mode voltage and induced shaft voltage. FIG. 1 is depicted with a variable frequency drive (VFD).

Shaft voltage refers to the voltage that appears across the rotating shaft of the motor. This phenomenon can be detrimental to motor performance, causing problems such as excessive bearing wear due to electrical discharge machining (EDM), and ultimately motor failure.

One of the primary causes of shaft voltage is the common mode voltage, which arises from the interaction between the motor's load and the electrical supply. In certain motor configurations, especially those with variable frequency drives (VFDs) or other power electronics in the control circuit, common mode voltages can induce a voltage potential on the motor's shaft. These common mode voltages often result from imbalances in the power supply or improper grounding of the motor and drive systems. As a result, a voltage potential is created between the motor shaft and its frame. Parasitic capacitances lead to unintended currents flowing through unintended components such as the bearings. This can cause electrical pitting, flashing, and premature failure.

In many instances, common mode voltage is a consequence of the high-frequency switching behavior of variable frequency drive (VFD) power inverters, which are commonly used in modern motor control systems. These inverters can generate high-frequency noise and transients that are capacitively coupled into the motor windings and subsequently transferred to the shaft.

The effects of shaft voltage can be detrimental not only to the longevity of the motor itself but also to the associated equipment, such as bearings, which are often expensive to replace and critical to the overall operation.

### SUMMARY

An embodiment of the present disclosure provides a motor drive system for optimizing a restricted pulse modulation schedule, the motor drive system comprising a six-phase alternating current induction motor having a stator with a plurality of stator phase windings wound thereon, each stator phase winding separated spatially by 30 electrical degrees from a previous stator phase winding such that each of at least six stator phases is interleaved with another stator phase; a motor drive with a power supply and an at least one inverter for the six-phase alternating current induction motor, the power supply supplying direct current to the at least one inverter, and the at least one inverter including a plurality of logic gates, wherein the plurality of logic gates are adapted as insulated gate bipolar transistors connecting the inverter to the plurality of stator phase windings; and a controller configured with an incident energy threshold and configured to manipulate the plurality of logic gates to transmit pulse modulated current to the plurality of stator phase windings such that the inverter supplies alternating current to the motor to satisfy a first speed and/or torque output requirement of the six-phase alternating current induction motor, wherein the controller restricts transmission of the pulse modulation current to the plurality of stator phase windings such that a common mode voltage to the stator is at or below the incident energy threshold.

### BRIEF DESCRIPTION OF THE DRAWINGS

Subject matter of the present disclosure will be described in even greater detail below based on the exemplary figures. All features described and/or illustrated herein can be used alone or combined in different combinations. The features and advantages of various embodiments will become apparent by reading the following detailed description with reference to the attached drawings, which illustrate the following:
FIG. 1A illustrates a view of a multiphase drive motor with a common mode voltage and induced shaft voltage;
FIG. 1B illustrates a schematic view of a multiphase drive motor with a common mode voltage and induced shaft;
FIG. 2 illustrates a schematic view of an embodiment of a six-phase or dual three-phase drive motor with two inverters in an interleaved arrangement of the present disclosure;
FIGs. 3A and 3B illustrate a view of an embodiment of voltage space vectors for a dual three-phase drive motor of the present disclosure;
FIG. 3C illustrates a graphical representation of an embodiment of the total common mode voltage (CMV) and the sub-CMVs for interleaved inverters in a switching pattern of the present disclosure;
FIG. 4A illustrates a graphical representation of reduced candidate vectors of an embodiment of voltage space vectors for a dual three-phase drive motor of the present disclosure;
FIG. 4B illustrates a graphical representation of the pulse arrangement and effective common mode voltage of an embodiment where the reference is located in sector I of FIG. 4A;
FIG. 5 illustrates a schematic view of an embodiment of a motor control system including six phase or dual three-phase drive motor with insulated gate bipolar transistors (IGBTs) controlled by a common controller;
FIG. 6 illustrates a flow chart for optimizing a restricted pulse modulation schedule by a controller using the embodiments described in the present disclosure; and
FIG. 7 illustrates a simplified block diagram of one or more devices or systems for optimizing a restricted pulse modulation schedule by a controller of the present disclosure.

### DETAILED DESCRIPTION

In an embodiment, the present disclosure provides a multiphase drive motor with common mode voltage (CMV) control performed by a controller and an associated method of control of the CMV by the controller.

An embodiment of the present disclosure provides a motor drive system for optimizing a restricted pulse modulation schedule, the motor drive system comprising a six-phase alternating current induction motor having a stator with a plurality of stator phase windings wound thereon, each stator phase winding separated spatially by 30 electrical degrees from a previous stator phase winding such that each of at least six stator phases is interleaved with another stator phase; a motor drive with a power supply and an at least one inverter for the six-phase alternating current induction motor, the power supply supplying direct current to the at least one inverter, and the at least one inverter including a plurality of logic gates, wherein the plurality of logic gates are adapted as insulated gate bipolar transistors connecting the inverter to the plurality of stator phase windings; and a controller configured with an incident energy threshold and configured to manipulate the plurality of logic gates to transmit pulse modulated current to the plurality of stator phase windings such that the inverter supplies alternating current to the motor to satisfy a first speed and/or torque output requirement of the six-phase alternating current induction motor, wherein the controller restricts transmission of the pulse modulation current to the plurality of stator phase windings such that a common mode voltage to the stator is at or below the incident energy threshold.

In an embodiment of the motor drive system, the controller restricts transmission of the pulse modulation current to a first stator phase winding of the plurality of stator phase windings where the pulse modulation current is unbalanced by an inverted pulse modulation current to a second stator phase winding of the plurality of stator phase windings such that a net of the common mode voltage is zero with respect to the first stator phase winding and the second stator phase winding, and the first stator phase winding is associated with a first stator phase, and the second stator phase winding is associated with a second stator phase, wherein the first stator phase is interleaved with the second stator phase.

In an embodiment of the motor drive system, the controller is configured to manipulate the plurality of logic gates such that the inverter supplies a modified alternating current to the six-phase alternating current induction motor within the pulse modulation current to satisfy a second speed and/or torque output requirement of the six-phase alternating current induction motor.

In an embodiment of the motor drive system, the controller is configured to use historical data to iteratively optimize the restricted schedule of pulse modulation current for each of the first output requirement and the second output requirement.

In an embodiment of the motor drive system, the incident energy threshold is zero.

In an embodiment of the motor drive system, the motor drive system is implemented in a hazardous working environment with a hazardous environment ignition energy threshold around the six-phase alternating current induction motor, and the motor drive system further comprises a grounding brush upon an output shaft of the six-phase alternating current induction motor with an energy damping property, and the incident energy threshold is a summation of the hazardous environment ignition energy threshold and the energy damping property.

An embodiment of the present disclosure provides a computer-implemented method for optimizing a restricted pulse modulation schedule by a controller, the method comprising manipulating, by the controller, a plurality of logic gates to transmit pulse modulated current to a plurality of stator phase windings such that an inverter supplies alternating current to a six phase alternating current induction motor to satisfy a first speed and/or torque output requirement of the six phase alternating current induction motor to enforce an incident energy threshold, and the transmission of the pulse modulation current to the plurality of stator phase windings is restricted such that a common mode voltage to a stator is at or below the incident energy threshold, and the six phase alternating current induction motor includes the stator with the plurality of stator phase windings wound thereon, each stator phase winding separated spatially by 30 electrical degrees from a previous stator phase winding such that each of at least six stator phases is interleaved with another stator phase, and the six phase alternating current induction motor is associated with a motor drive with a power supply and the inverter for the six phase alternating current induction motor including the plurality of logic gates adapted as insulated gate bipolar transistors connecting the inverter to the plurality of stator phase windings.

In an embodiment of the computer-implemented method, the method includes restricting, by the controller, transmission of the pulse modulation current to a first stator phase winding of the plurality of stator phase windings where the pulse modulation current is unbalanced by an inverted pulse modulation current to a second stator phase winding of the plurality of stator phase windings such that a net of the common mode voltage is zero with respect to the first stator phase winding and the second stator phase winding, and the first stator phase winding is associated with a first stator phase, and the second stator phase winding is associated with a second stator phase, and the first stator phase is interleaved with the second stator phase.

In an embodiment of the computer-implemented method, the method includes manipulating the plurality of logic gates, by the controller, such that the inverter supplies a modified alternating current to the motor within the pulse modulation current to satisfy a second speed and/or torque output requirement of the motor.

In an embodiment of the computer-implemented method, the method includes optimizing, iteratively, by the controller and using historical data, the restricted schedule of pulse modulation current for each of the first output requirement and the second output requirement.

In an embodiment of the computer-implemented method, the incident energy threshold is zero.

In an embodiment of the computer-implemented method, the method includes maintaining, by the controller, a hazardous environment ignition energy threshold associated with the six phase alternating current induction motor, wherein the six phase alternating current induction motor is implemented in a hazardous working environment, wherein the six phase alternating current induction motor is communicatively coupled to a grounding brush upon an output shaft of the six phase alternating current induction motor, wherein the grounding brush has an energy damping property, and wherein the incident energy threshold is a summation of the hazardous environment ignition energy threshold and the energy damping property.

An embodiment of the present disclosure provides a tangible, non-transitory computer-readable medium having instructions thereon which, upon being executed by one or more processors of a controller, provide for optimizing a restricted pulse modulation schedule by execution of the following step(s): manipulating a plurality of logic gates to transmit pulse modulated current to a plurality of stator phase windings such that an inverter supplies alternating current to a six phase alternating current induction motor to satisfy a first speed and/or torque output requirement of the six phase alternating current induction motor to enforce an incident energy threshold, and the transmission of the pulse modulation current to the plurality of stator phase windings is restricted such that a common mode voltage to a stator is at or below the incident energy threshold, and the six phase alternating current induction motor includes the stator with the plurality of stator phase windings wound thereon, each stator phase winding separated spatially by 30 electrical degrees from a previous stator phase winding such that each of at least six stator phases is interleaved with another stator phase, and the six phase alternating current induction motor is associated with a motor drive with a power supply and the inverter for the six phase alternating current induction motor including the plurality of logic gates adapted as insulated gate bipolar transistors connecting the inverter to the plurality of stator phase windings.

In an embodiment of the tangible, non-transitory computer-readable medium, the instructions, upon being executed by the one or more processors of the controller, are further configured to execute the following steps: restricting, by the controller, transmission of the pulse modulation current to a first stator phase winding of the plurality of stator phase windings where the pulse modulation current is unbalanced by an inverted pulse modulation current to a second stator phase winding of the plurality of stator phase windings such that a net of the common mode voltage is zero with respect to the first stator phase winding and the second stator phase winding, and the first stator phase winding is associated with a first stator phase, and the second stator phase winding is associated with a second stator phase, and the first stator phase is interleaved with the second stator phase.

In an embodiment of the tangible, non-transitory computer-readable medium, the instructions, upon being executed by the one or more processors of the controller, are further configured to execute the following step(s): manipulating the plurality of logic gates such that the inverter supplies a modified alternating current to the motor within the pulse modulation current to satisfy a second speed and/or torque output requirement of the motor.

In an embodiment of the tangible, non-transitory computer-readable medium, the instructions, upon being executed by the one or more processors of the controller, are further configured to execute the following steps: optimizing, iteratively and using historical data, the restricted schedule of pulse modulation current for each of the first output requirement and the second output requirement.

In an embodiment of the tangible, non-transitory computer-readable medium, the incident energy threshold is zero.

In an embodiment of the tangible, non-transitory computer-readable medium, the instructions, upon being executed by the one or more processors of the controller, are further configured to execute the following steps: maintaining a hazardous environment ignition energy threshold associated with the six-phase alternating current induction motor, and the six-phase alternating current induction motor is implemented in a hazardous working environment, and the six-phase alternating current induction motor is communicatively coupled to a grounding brush upon an output shaft of the six-phase alternating current induction motor, and the grounding brush has an energy damping property, and the incident energy threshold is a summation of the hazardous environment ignition energy threshold and the energy damping property.

In an embodiment of the tangible, non-transitory computer-readable medium, manipulating the plurality of logic gates includes determining candidate vectors in a vector space representing the six-phase alternating current induction motor, wherein the candidate vectors are further reduced to include active vectors and null vectors.

In an embodiment of the tangible, non-transitory computer-readable medium, a duty time is determined by the controller for each vector of the candidate vectors based on implementing a multi-dimensional space vector modulation (MDSVM) scheme.

FIGs. 1A and 1B illustrate a view of an embodiment of a multiphase drive motor with a common mode voltage and induced shaft voltage, wherein the embodiment of FIG. 1A is further depicted with an optional VFD 124. The most common multiphase drive motor is a three-phase drive motor. In FIGs. 1A and 1B, single-phase alternating current (AC) is provided by a single-phase power supply 102 to a multiphase converter 104. The multiphase converter 104 comprises a single-phase AC to DC converter 106 and a DC to multiphase AC converter, or multiphase inverter 108. The AC to DC converter 106 converts the power of the single-phase AC power supply 102 to direct current (DC). This is transmitted to the multiphase inverter 108. The inverter 108 employs insulated gate bipolar transistors (IGBTs), configured to invert the DC power to generate a multiphase AC power supply to a stator 112 of the multiphase motor 110. This occurs when the IGBTs are switched on and off in a sequence determined by a controller. In an embodiment depicted in FIG. 1A, the multiphase converter 104 further comprises a VFD that controls motor speed by switching the IGBTs to modulate output, i.e., using pulse-width modulation (PWM). However, based on rapid switching of the IGBTs and the parasitic capacitance between the stator 112 and the rotor 114, a common mode voltage (CMV) 116 in the rotor 114 is generated. The CMV drives a shaft voltage 118. Based on the shaft voltage 118 and parasitic capacitances, unintended current flows through unintended components to reach the grounding of the motor frame 120, such as the bearings 122. This can cause pitting, flashing, and premature failure in the unintended components such as the bearings 112.

FIG. 2 illustrates a schematic view of an embodiment of a six-phase or dual three-phase drive motor with two inverters in an interleaved arrangement of the disclosure. AC is provided by a single-phase AC power supply 202 to a single-phase AC to DC converter 204. The converter 204 converts the power of the single-phase AC power supply 202 to DC. This is transmitted to an inverter 206 and an inverter 208. The inverters are configured to supply multiphase AC to the motor 210 in an interleaved arrangement 212. The interleaved arrangement is such that the modulation carrier of inverter 208 is phase-shifted by 180 electrical degrees from that of inverter 206. This embodiment enables the modulation of two inverters 206 and 208 across the multiphases in the same pattern. This results in two inverters 206 and 208 that are creating the same CMV-or the same magnitude, phase, and polarity of CMV. By this arrangement, CMV can be reduced by this interleaving 212 of the inverters 206 and 208. The interleaving 212 of the inverters 206, 208 creates the 180 electrical degree phase difference between a carrier signal of the first inverter 206 and a carrier signal of the second inverter 208. Specifically, the inverters 206, 208 are displaced from one another by 180 electrical degrees to form a polarity shift between the first inverter 206 and the second inverter 208. The result is a same magnitude of the CMV of the first inverter 206 and second inverter 208 with a reversed polarity, causing them to cancel one another out. This method and process greatly reduces overall CMV and is only possible in a six-phase or dual three-phase drive (or other even-integer phase multiphase drives), as a three-phase drive inverter lacks the extra degree of freedom to create the interleaved configuration. To achieve complete CMV elimination, as described herein, the switching pulses of a sub-set of the voltage vectors must be carefully arranged or determined to guarantee total CMV cancellation. The switching arrangement of these vectors results in irregular patterns different from those of the standard space vector approach. The present disclosure describes a controller implementing an optimal switching pattern to effect total CMV suppression through its hardware timers and control registers.

Specifically, in an embodiment of the dual three-phase motor implementation, each inverter will have its own PWM module. The modulation signal therein is displaced by 30 degrees. The aforementioned carrier signal is introduced to modulate the reference signal. The carrier signal is advantageously a high-frequency signal such as a triangle signal. The carrier signal runs, in an example, at a frequency of a few kilohertz. In this example, the modulation signal is running at a lower frequency such as the fundamental frequency of the machine. The 180 electrical degree phase displacement introduced to the undo or reduce CMV is introduced on the carrier signal and not upon the modulation signal. An embodiment can utilize sine-triangle modulation for the carrier signal to substantially reduce common mode voltage to insubstantial levels or to levels that can be mitigated with external damping sources. An example of the external damping sources is a motor shaft brush or other appropriate damping method.

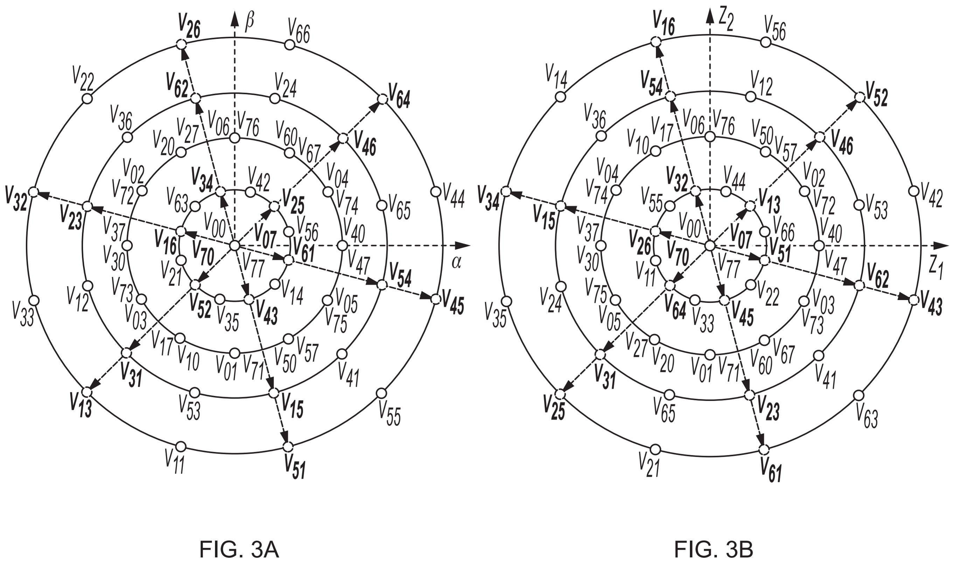

An embodiment can also utilize space vector modulation or a comparable ultralocal solution, which can eliminate CMV entirely. Multiphase electrical signals like voltage, current, and flux can be transformed into multi-two-dimensional vector spaces using the vector space decomposition (VSD) method. This transformation or representation simplifies analysis and calculation of the waves. This can be utilized for a multiphase motor to perform vector control or field-oriented control (FOC) in a resource-feasible manner. FIGs. 3A and 3B illustrate a view of an embodiment of voltage space vectors for a dual three phase drive motor of the present disclosure. FIGs 3A and 3B are the decomposed vector spaces of a dual three-phase inverter. The vector space in FIG 3A reflects the components responsible for energy conversion and torque production, while FIG 3B reflects the components that results in motor harmonic loss.

Unlike conventional PWM methods that treat the dual three-phase inverter system as two separate units with interleaving between their modulation carriers, the VSD approach treats it as a 6-dimensional system, creating opportunities to further manipulate common-mode voltage and other control objectives. Because each leg or phase of the inverter can assume two states, a 6-dimensional view of the system creates 64, or 2 to the 6^{th} power, possible states. On the other hand, a common 3-phase motor creates only 8, or 2 to the 3^{rd} power, possible states.

However, in a configuration of a dual three-phase interleaved motor, of the 64 voltages that can be manipulated by a controller, only 18 of them can be manipulated to produce 0 common mode voltage. In a further aspect, the controller may manipulate the 18 voltages to fire in an asymmetrical switching pattern between the first inverter and the second to correct ultralocal asymmetries in CMVs or to compensate for the lost degrees of freedom offered by the full array of 64 voltages. In an embodiment, all 64 voltages, or a greater number of voltages of the 64 than the aforementioned 18, are used in a manner generating a minimal amount of common mode voltage or an amount of common mode voltage that does not exceed the threshold. In a further aspect, higher motor speed requirements are imposed, or external brushes are implemented, in tandem with the manipulation of the 64 voltages or 18 voltages to raise the safety threshold.

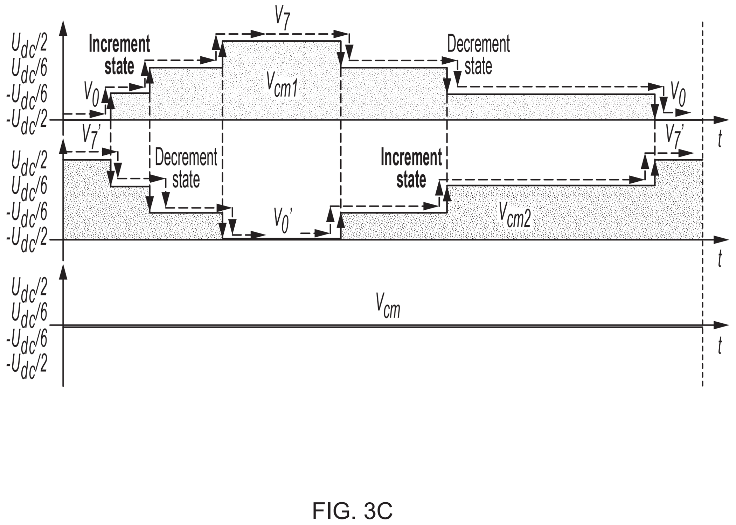

A challenge is created, therefore, in generating the modulation signal for the six-phase drive using only the 18 voltages identified as candidates for providing 0 common mode voltage. These 18 voltages are manipulated in by the controller to form a carrier signal and a second phase shifted carrier signal whose common mode voltages negate one another on an ultralocal level while also providing appropriate PWM satisfying the output requirements for motor. Output requirements can include requirements for controlling torque, speed and/or other appropriate output requirements for a motor. FIG. 3C illustrates a graphical representation of an embodiment of sub-CMVs V_{cm1} and V_{cm2} for interleaved inverters in a switching pattern generating equal CMVs with a phase shift to form a zero-total CMV of the present disclosure. These carrier signals are formed by a specific switching pattern of the inverters' IGTBs themselves. In an embodiment, only switching patterns generating zero CMV or effectively no CMV are permitted. In an embodiment, a CMV being greater than zero but below an incident energy threshold is permitted. In a further aspect, the motor is operated in a hazardous environment having an associated hazardous environment ignition energy or energy threshold, and the motor is optionally outfitted with a grounding brush or appropriate CMV damping mechanism having an associated damping property. The incident energy threshold can be a summation of the ignition energy threshold and the damping property.

The reduced voltages may lead to increased phase current distortions if not properly handled. Moreover, some of the 18 voltage vectors in FIG 3A that generate zero CMV can have high components in the harmonic subspace of FIG 3B, leading to high motor harmonic loss. For example, V25 is small in FIG. 3A but large in FIG. 3B. Therefore, the solution described in the present disclosure can optimize the following objectives simultaneously - motor control (speed or torque), harmonic loss suppression, and common mode voltage elimination.

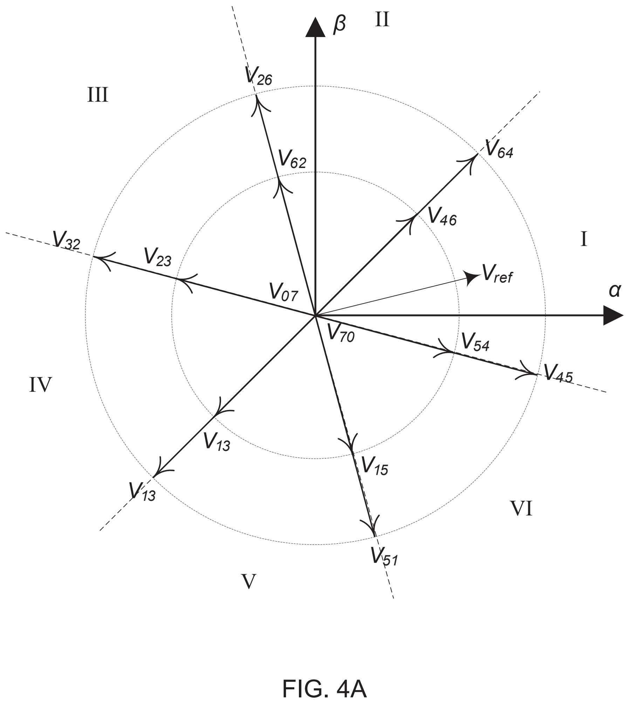

An embodiment can adopt a complex end-end cyclic sequencing pattern, wherein the PWM patterns are first generated using a sine-triangle approach and thereafter phase-shifted with the designed end-end sequence. An embodiment can rely on a multi-dimensional space vector modulation (MDSVM) approach. Considering the smallest highlighted vectors in FIG 3A have large harmonic components as seen in FIG 3B, the candidate vectors are reduced further to include only the 12 active vectors and 2 null vectors shown in FIG. 4A. To synthesize the reference voltage, the vector space of the motor drive is divided into six sections as shown in FIG 4A. In each sector, the reference vector is synthesized by 4 active vectors and 2 null vectors. The duty time of each constituent vector is obtained from MDSVM scheme. The duty ratios from the MDSVM scheme are computed in real-time by the controller/processor. In the final step, the constituent vectors are arranged in a unique pattern for easy implementation on the same processor, using its hardware timers and control registers. An aspect of this scheme directly calculates the duty ratios of the desired candidate vectors and arranges them in the prescribed pattern for easy implementation on a low-cost MCU. Additionally, since the candidate vectors, the MDSVM, and the proposed switching pattern not only account for CMV suppression but also harmonic loss suppression, the design of the main motor drive controller is much simpler because its objective only involves regulating speed or torque.

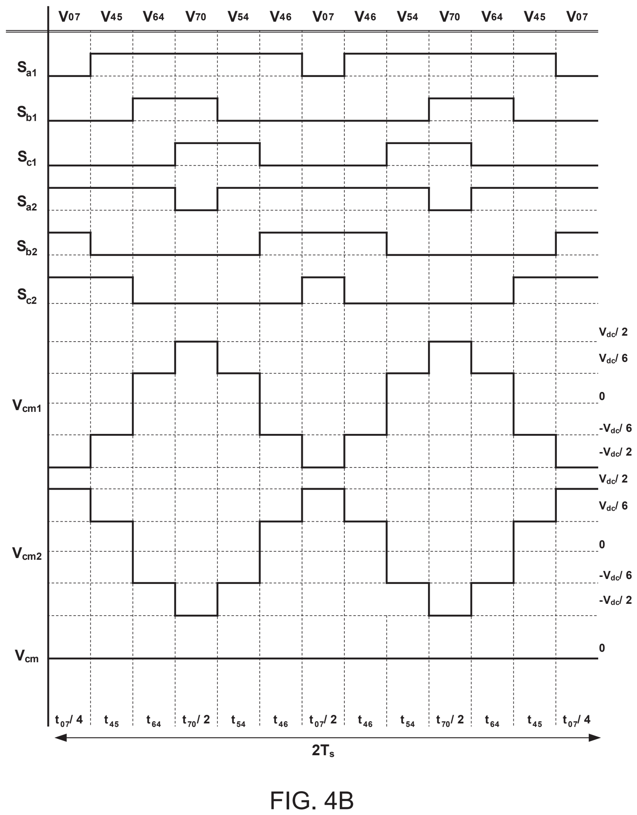

FIG. 4B shows the proposed pulse arrangement and effective common-mode voltage when the reference is located in sector I. Similar patterns are generated for the other Sectors and stored in the processor's memory. The switching pattern is asymmetric over one switching cycle but symmetric over two control periods. This helps to minimize phase current distortions. The net CMV is zero over the control periods.

Historical data is used in the optimization process. Historical data comprises the switching patterns which provide appropriate PWM satisfying output requirements for the motor without generating a common mode voltage. The output requirements and the appropriate PWM satisfying the output requirements can vary given changes in performance parameters. These changes in performance parameters can consist of certain output speed or torque or other load requirements. The historical data can include a look up table of switching patterns in certain scenarios. However, in an embodiment, the performance parameters will include amounts of time for a given switching pattern in an on state and in an off state. The calculations for these states and durations must be performed in real time. Relatedly, specific switching patterns and durations can vary depending on either the current set of output requirements as well as the shift to such a set of output requirements from various other prior sets of output requirements. In other words, the optimization algorithm uses switching patterns, for example asymmetrical patterns from the 18 voltage vector set, drawn from the lookup table as well as calculating, in real time, the duration for each of those modulations. This can be an optimization algorithm that has the pattern plus the input command, which can provide the duration or duration for the pattern. The controller would communicate the switching pattern and duration to the IGBTs. In an embodiment, the patterns can be generated by a machine learning process the discovers new patterns for optimization that satisfies both the motor output parameters and the common mode voltage threshold.

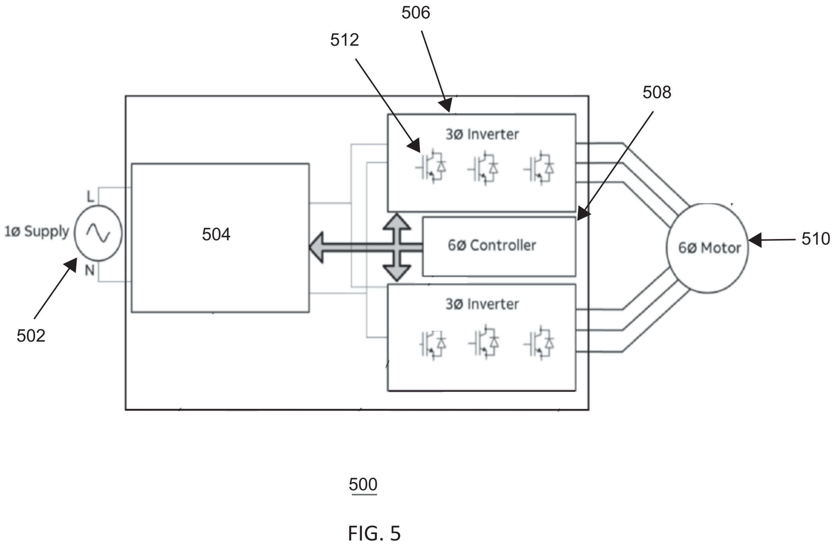

FIG. 5 illustrates a schematic view of an embodiment of a motor control system 500 including six phase or dual three phase drive motor with IGBTs controlled by a common controller. AC is provided by a single phase AC power supply 502 to a single phase AC to DC converter 504. The converter 504 converts the power of the single phase AC power supply 502 to DC. This is transmitted to inverters 506. In an embodiment, a controller and modulator is combined into one unit, the controller 508. Typically, a separate controller performs vector control, e.g. field-oriented control, in the industrial drive in a first block. This provides a voltage reference that is supplied to a separate modulator in a second block. The modulator manages the PWM with the modulation or execution of a switching sequence. The second block creates the pulses that go to an inverter. The controller generates the modulation signal and transmits it to a modulator that creates the pulses by switching the IGBTs. Herein, the modulator forms part of the controller 508. Both the consideration of those CMV-reducing or eliminating switching sequences or PWM pulses to which the embodiment is restricted as well as the output requirements of the motor are performed by the controller 508. This restriction can be a hard set of 0 CMV switching patterns or PWM pulses, or may include a soft set of patterns or pulses that producing tolerable CMV and satisfy rigorous, rapidly shifting, or otherwise problematic motor output requirements. In a further aspect, the controller may have a soft set of patterns or pulses producing CMV that are only tolerable when utilized in specific scenarios or combinations or in restricted timing sequences to avoid surpassing the incident energy threshold while meeting problematic output requirements. Additionally, the controller may permit deviations from or timing lag in meeting output requirements, in combination with the hard set and/or soft set, to avoid surpassing the incident energy threshold.

In an embodiment, the combined controller 508 performs an optimization to simultaneously restrict vectors to combinations that mitigate or eliminate CMV and provide the motor 510 output requirements. The CMV incident energy threshold is a constraint or an input into the control loop, rather than a decoupled controller separately feeding a modulation block. Optimization can thereby be performed by model predictive control. The output of this would provide switching patterns of the IGTBs 512 that provide the torque control or motor output requirements which satisfy the CMV incident energy threshold requirement. The optimization can manage tradeoffs between output requirement controls versus CMV generation, such as with actions discussed above. This improves a precision and agility of the controller 508 and the output of the inverters 506 to the motor 510, producing improved motor outputs, achievable without exceeding a CMV incident energy threshold or safety limit in a given application or environment.

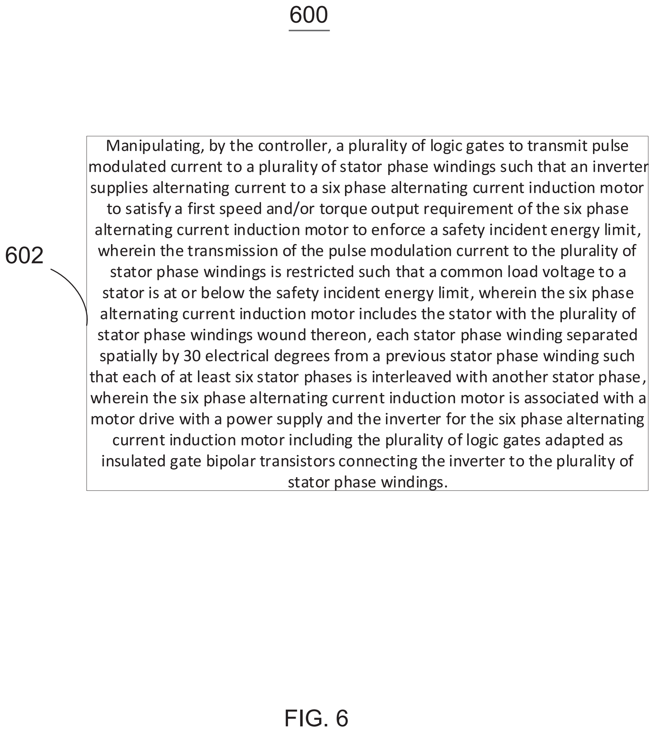

FIG. 6 illustrates a flow chart for optimizing a restricted pulse modulation schedule by a controller using the embodiments described in the present disclosure. FIG. 6 includes an exemplary process 600 which may be performed by a controller such as in FIGs. 2 and 5. However, it will be recognized that the process 600 may be performed by any suitable computing device and/or controller.

At step 602, the process 600 includes manipulating, by the controller, a plurality of logic gates to transmit PWM to a plurality of stator phase windings such that an inverter supplied AC to a six phase AC induction motor to satisfy a first speed and/or torque output requirement of the six phase AC current induction motor. This is done to enforce an incident energy limit. The transmission of the PWM to the plurality of stator phase windings is restricted such that a CMV to a stator is at or below the incident energy limit The six phase AC induction motor includes the stator with the plurality of stator phase windings wound thereon, each stator phase winding separated spatially by 30 electrical degrees from a previous stator phase winding such that each of at least six stator phases is interleaved with another stator phase. The six phase AC induction motor is associated with a motor drive with a power supply and the inverter for the six phase AC induction motor including the plurality of logic gates adapted as insulated gate bipolar transistors connecting the inverter to the plurality of stator phase windings.

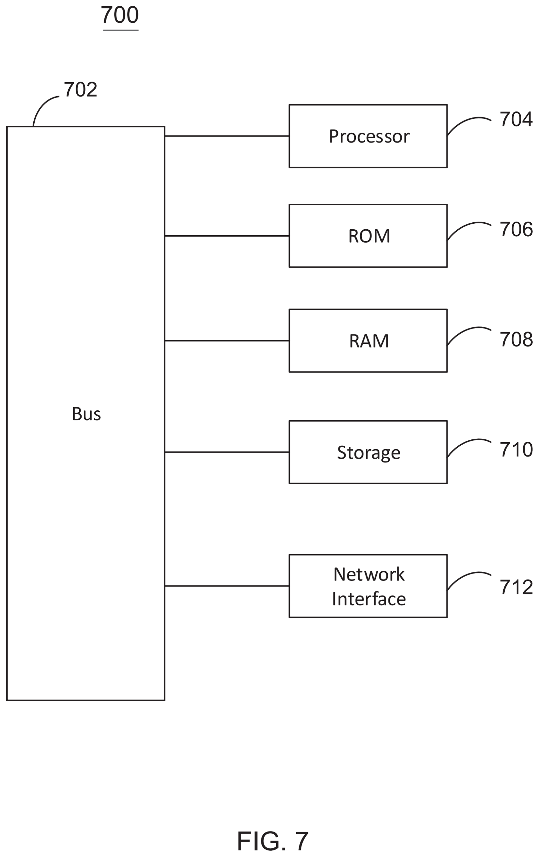

FIG. 7 is a block diagram of an exemplary system or device 700 within motor control system 500 such as the controller 508. The system 700 includes a processor 704, such as a central processing unit (CPU), and/or logic, that executes computer executable instructions for performing the functions, processes, and/or methods described herein. In some examples, the computer executable instructions are locally stored and accessed from a non-transitory computer readable medium, such as storage 710, which may be a hard drive or flash drive. Read Only Memory (ROM) 706 includes computer executable instructions for initializing the processor 704, while the random-access memory (RAM) 708 is the main memory for loading and processing instructions executed by the processor 704.

The network interface 712 may connect to a wired network or cellular network and to a local area network or wide area network. The system 700 may also include a bus 702 that connects the processor 704, ROM 706, RAM 708, storage 710, and/or the network interface 712. The components within the system 700 may use the bus 702 to communicate with each other. The components within the system 700 are merely exemplary and might not be inclusive of every component for embodiments described herein. For instance, in some examples, the system 700 might not include a network interface 712. In embodiments the system 700 may include one or more components for interacting with a machine or system executing an automated process such as actuators, output devices (e.g., speakers or user interfaces), power convertors or power supply systems. The system may use the one or more components for executing an action in response to identifying an anomaly such as ceasing operation of the machine or system, presenting an alarm or warning, visual or auditory, or reducing or otherwise cutting power to a machine to prevent further damage or catastrophic events. In embodiments the network interface 812 may communicate with one or more machines, computers, or systems within a facility or industrial environment to obtain historic operating data, test data, and/or model files for identifying anomalies which may represent issues, problems, or potential failure of a component of a machine or system.

While the disclosure has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present disclosure covers further embodiments with any combination of features from different embodiments described above and below. Additionally, statements made herein characterizing the disclosure refer to an embodiment of the disclosure and not necessarily all embodiments.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

## Claims

1. A motor drive system for optimizing a restricted pulse modulation schedule, the motor drive system comprising:
a six-phase alternating current induction motor having a stator with a plurality of stator phase windings wound thereon, each stator phase winding separated spatially by 30 electrical degrees from a previous stator phase winding such that each of at least six stator phases is interleaved with another stator phase;
a motor drive with a power supply and an at least one inverter for the six-phase alternating current induction motor, the power supply supplying direct current to the at least one inverter, and the at least one inverter including a plurality of logic gates, wherein the plurality of logic gates are adapted as insulated gate bipolar transistors connecting the inverter to the plurality of stator phase windings; and
a controller configured with an incident energy threshold and configured to manipulate the plurality of logic gates to transmit pulse modulated current to the plurality of stator phase windings such that the inverter supplies alternating current to the motor to satisfy a first speed and/or torque output requirement of the six-phase alternating current induction motor,
wherein the controller restricts transmission of the pulse modulation current to the plurality of stator phase windings such that a common mode voltage to the stator is at or below the incident energy threshold.

2. The motor drive system of claim 1, wherein the controller further restricts transmission of the pulse modulation current to a first stator phase winding of the plurality of stator phase windings where the pulse modulation current is unbalanced by an inverted pulse modulation current to a second stator phase winding of the plurality of stator phase windings such that a net of the common mode voltage is zero with respect to the first stator phase winding and the second stator phase winding, and
wherein the first stator phase winding is associated with a first stator phase, and the second stator phase winding is associated with a second stator phase, wherein the first stator phase is interleaved with the second stator phase.

3. The motor drive system of claim 1 or 2, wherein the controller is further configured to manipulate the plurality of logic gates such that the inverter supplies a modified alternating current to the six-phase alternating current induction motor within the pulse modulation current to satisfy a second speed and/or torque output requirement of the six-phase alternating current induction motor.

4. The motor drive system of claim 3, wherein the controller is further configured to use historical data to iteratively optimize the restricted schedule of pulse modulation current for each of the first output requirement and the second output requirement.

5. The motor drive system of one of the preceding claims, wherein the incident energy threshold is zero.

6. The motor drive system of one of the preceding claims, wherein the motor drive system is implemented in a hazardous working environment with a hazardous environment ignition energy threshold around the six-phase alternating current induction motor, wherein the motor drive system further comprises a grounding brush upon an output shaft of the six-phase alternating current induction motor with an energy damping property, and wherein the incident energy threshold is a summation of the hazardous environment ignition energy threshold and the energy damping property.

7. A computer-implemented method for optimizing a restricted pulse modulation schedule by a controller, the method comprising:
manipulating, by the controller, a plurality of logic gates to transmit pulse modulated current to a plurality of stator phase windings such that an inverter supplies alternating current to a six phase alternating current induction motor to satisfy a first speed and/or torque output requirement of the six phase alternating current induction motor to enforce an incident energy threshold, wherein the transmission of the pulse modulation current to the plurality of stator phase windings is restricted such that a common mode voltage to a stator is at or below the incident energy threshold, wherein the six phase alternating current induction motor includes the stator with the plurality of stator phase windings wound thereon, each stator phase winding separated spatially by 30 electrical degrees from a previous stator phase winding such that each of at least six stator phases is interleaved with another stator phase, wherein the six phase alternating current induction motor is associated with a motor drive with a power supply and the inverter for the six phase alternating current induction motor including the plurality of logic gates adapted as insulated gate bipolar transistors connecting the inverter to the plurality of stator phase windings.

8. The computer-implemented method of claim 7, further comprising restricting, by the controller, transmission of the pulse modulation current to a first stator phase winding of the plurality of stator phase windings where the pulse modulation current is unbalanced by an inverted pulse modulation current to a second stator phase winding of the plurality of stator phase windings such that a net of the common mode voltage is zero with respect to the first stator phase winding and the second stator phase winding, and
wherein the first stator phase winding is associated with a first stator phase, and the second stator phase winding is associated with a second stator phase, wherein the first stator phase is interleaved with the second stator phase.

9. The computer-implemented method of claim 7 or 8, further comprising manipulating the plurality of logic gates, by the controller, such that the inverter supplies a modified alternating current to the motor within the pulse modulation current to satisfy a second speed and/or torque output requirement of the motor.

10. The computer-implemented method of claim 9, further comprising optimizing, iteratively, by the controller and using historical data, the restricted schedule of pulse modulation current for each of the first output requirement and the second output requirement.

11. The computer-implemented method of one of claims 7 to 10, further comprising maintaining, by the controller, a hazardous environment ignition energy threshold associated with the six phase alternating current induction motor, wherein the six phase alternating current induction motor is implemented in a hazardous working environment, wherein the six phase alternating current induction motor is communicatively coupled to a grounding brush upon an output shaft of the six phase alternating current induction motor, wherein the grounding brush has an energy damping property, and wherein the incident energy threshold is a summation of the hazardous environment ignition energy threshold and the energy damping property.

12. A tangible, non-transitory computer-readable medium having instructions thereon which, upon being executed by one or more processors of a controller, provide for optimizing a restricted pulse modulation schedule by execution of the following steps:
manipulating a plurality of logic gates to transmit pulse modulated current to a plurality of stator phase windings such that an inverter supplies alternating current to a six phase alternating current induction motor to satisfy a first speed and/or torque output requirement of the six phase alternating current induction motor to enforce an incident energy threshold, wherein the transmission of the pulse modulation current to the plurality of stator phase windings is restricted such that a common mode voltage to a stator is at or below the incident energy threshold, wherein the six phase alternating current induction motor includes the stator with the plurality of stator phase windings wound thereon, each stator phase winding separated spatially by 30 electrical degrees from a previous stator phase winding such that each of at least six stator phases is interleaved with another stator phase, wherein the six phase alternating current induction motor is associated with a motor drive with a power supply and the inverter for the six phase alternating current induction motor including the plurality of logic gates adapted as insulated gate bipolar transistors connecting the inverter to the plurality of stator phase windings.

13. The tangible, non-transitory computer-readable medium according to claim 12, wherein the instructions, upon being executed by the one or more processors of the controller, are further configured to execute the following steps:
restricting, by the controller, transmission of the pulse modulation current to a first stator phase winding of the plurality of stator phase windings where the pulse modulation current is unbalanced by an inverted pulse modulation current to a second stator phase winding of the plurality of stator phase windings such that a net of the common mode voltage is zero with respect to the first stator phase winding and the second stator phase winding, and
wherein the first stator phase winding is associated with a first stator phase, and the second stator phase winding is associated with a second stator phase, wherein the first stator phase is interleaved with the second stator phase.

14. The tangible, non-transitory computer-readable medium according to claim 12 or 13, wherein manipulating the plurality of logic gates includes determining candidate vectors in a vector space representing the six-phase alternating current induction motor, wherein the candidate vectors are further reduced to include active vectors and null vectors.

15. The tangible, non-transitory computer-readable medium according to claim 14, wherein a duty time is determined by the controller for each vector of the candidate vectors based on implementing a multi-dimensional space vector modulation (MDSVM) scheme.
